# EUROPEAN PATENT SPECIFICATION

(11) **EP 4 454 963 B1**
(45) Date of publication and mention of the grant of the patent: **10.09.2025**
(21) Application number: 23170056.8
(22) Date of filing: 26.04.2023
(51) Int. Cl.: B60T 17/08, F16J 3/04, F16J 15/52

(54) **BRAKE ACTUATOR FOR A VEHICLE, AND SEALING BOOT THEREFORE**
BREMSBETÄTIGUNGSVORRICHTUNG FÜR EIN KRAFTFAHRZEUG UND DICHTUNGSMANSCHETTE HIERFÜR
ACTIONNEUR DE FREIN POUR VÉHICULE ET SOUFFLET D'ÉTANCHÉITÉ POUR CELUI-CI

(43) Date of publication of application: 30.10.2024
(73) Proprietor: ZF CV Systems Europe BV, 1170 Brüssel (BE)
(72) Inventor: MARKO, Piotr, 46-100 Namyslow (PL)
(74) Representative: Ohlendorf, Henrike

(56) References cited:
- EP-A1- 0 692 651
- EP-A1- 2 990 683
- WO-A1-99/39082

## Description

The invention relates to a brake actuator for a vehicle, in particular for a commercial vehicle, comprising a housing having a push rod aperture, a push rod configured to connect to a brake mechanism, wherein the push rod is configured to move back and forth through the push rod aperture between a retracted position and an extended position, and a sealing boot extending along the push rod, being flexible in a longitudinal direction, having a first end portion sealingly engaging the push rod at an intermediate region of the push rod and a second end portion sealingly engaging the push rod aperture, the boot having a plurality of outer folds distributed along the longitudinal direction wherein the boot is configured to resiliently deform between a relaxed state and a loaded state, the relaxed state corresponding to the retracted position of the push rod and the loaded state corresponding to the extended position of the push rod.

Brake actuators of the aforementioned type are generally known in the art. Brake actuators of these types are typically used to provide service brake function and/or emergency or parking brake functions to the brake mechanism of the vehicle by moving the push rod back and forth such as to control the brake mechanism.

Typically, the push rod has a proximal end that is arranged inside the housing and connected to a piston head which is moved by pneumatic or hydraulic pressure, and a distal end protruding outside the housing through the push rod aperture. In order to function properly, the interior of the brake actuator must be kept free from dirt and any other particulate matter which might interfere with the piston movement. Therefore, the sealing boot closes off the push rod aperture and is interposed between the housing and the push rod by sealingly engaging the respective portions on the push rod and the housing. Typically, the sealing boot engages a correspondingly shaped groove or otherwise prepared portion of the push rod which is arranged between the proximal end and the distal end of the push rod.

The outer folds on the boot are typically provided between the first and second end portions of the boot to facilitate the transition of the boot from its relaxed position to the loaded position. In the prior art, the relaxed position would usually correspond to a boot in an unstressed, unloaded state, or a slightly hyperextended boot, i.e. stretched beyond its unloaded state in the longitudinal direction. The loaded state would correspond to a partially or fully compressed boot. Generally, and also in terms of the invention, the relaxed state is defined by a first boot length which is greater than a second boot length, the second boot length being the axial length of the boot in the longitudinal direction when the push rod is in the extended position. The relaxed position of the boot is maintained when the push rod is in the retracted position, in turn.

As an example of the prior art, European Patent Application EP 0 692 651 A1 discloses an air pressure actuator comprising a sealing boot with multiple folds.

In order to prevent the sealing boot from impairing the stroke movement of the push rod, the boot needs to be able to deform sufficiently far in the longitudinal direction. In order to do so, the sealing boot needs to have a substantial outer diameter in the end portion which engages the push rod aperture. Also, the sealing boot consumes space within the housing of the brake actuator, which space cannot be used by internal components of the brake actuator such as the piston had or any return springs, if present. It was desired to improve existing sealing boot designs such as to reduce the space requirement of the sealing boot within the brake actuator. It was also desired to improve the sealing boot design to prevent an impaired connectivity between the brake actuator and the brake mechanism. Further, it was desired to improve previously known sealing boot designs to allow for higher longevity of the sealing boot.

Accordingly, it was an object of the invention to overcome the deficiencies mentioned above as far as possible. In particular, it was an object of the invention to suggest an approved brake actuator in which the sealing boot consumes less space without sacrificing longevity of the sealing boot.

The object of the invention is attained by suggesting a brake actuator according to claim 1. In particular, the invention suggests that the first end portion of the boot comprises a stop shoulder arranged inside the housing, and the plurality of folds comprises at least one first outer fold configured to abut against the stop shoulder inside the housing when the push rod is in the extended position and at least one second outer fold configured to evert past the stop shoulder to the outside of the housing when the push rod is in the extended position. The abutment against the stop shoulder shall be understood to encompass both direct and indirect abutment.

The invention is based upon the realization that the space requirements for a sealing boot are comparatively high when one attempts to have the sealing boot remain completely inside the brake actuator housing such that no boot material extends outside of the push rod aperture in the extended position of the push rod. Similarly, the space consumption of a sealing boot is comparatively high when all of the outer folds are allowed to transition from the brake actuator housing towards the outside of the brake actuator housing, whereby they are everted inside out due to the movement of the push rod into the extended position. By suggesting that some of the outer folds, namely the first outer folds, are retained inside the brake actuator housing by interacting immediately or intermittently with the stop shoulder, while some other, but not all, outer folds, namely the one or more second folds, are allowed to evert past the stop shoulder to the outside of the housing, the space requirement inside the brake actuator housing can be drastically reduced. A significant portion of the sealing boot material is allowed to exist the brake actuator housing, freeing up additional space inside the brake actuator housing for various optimization concepts. However, since only a portion of the outer folds are allowed to evert past the stop shoulder, the amount of sealing boot material that is moved outside of the brake actuator housing (therewith into or close to the brake mechanism) is also capped, leading to a reduced risk of interference with the brake mechanism. Also, it has been found that by distinguishing the movement capabilities of the first and second outer folds from one another, the opening diameter of the push rod aperture which holds the respective end portion of the sealing boot can be made smaller, thus improving the mechanical integrity of the brake actuator housing.

In a preferred embodiment, the boot comprises a plurality of first outer folds, wherein the first outer folds are spaced apart from each other at a first distance when the boot is in the relaxed state, and at a second distance smaller than the first distance when the boot is in the loaded state. Preferably, the first outer folds adjoin when the boot is in the loaded state. After a first one of the first outer folds abuts against the stop shoulder, it essentially becomes the stop shoulder for the next adjacent first outer fold and so on.

In a further preferred embodiment, the first outer folds are joined by first flanks, said flanks being configured to spread apart when the boot is in the relaxed state and to abut against one another when the boot is in the loaded state. On the radial inner end, the flanks may optionally transition seamlessly into one another, or may be joined by inner folds which allow for a more articulate movement of the flanks relative to one another.

This, however, is a design choice depending on different variables such as the stroke length, material election and so forth.

In a further preferred embodiment, the number of second outer folds is smaller than the number of first outer folds. Preferably, the number of second outer folds is one or two. The number of first outer folds preferably is two or more.

In a further preferred embodiment, wherein the sealing boot has exactly one second outer fold, the second outer fold is axially spaced apart from the nearest first outer fold at a first distance when the boot is in the relaxed state, and at a second distance larger than the first distance when the boot is in the loaded state. Contrary to the movement of the first folds amongst one each other, the second fold, due to it being everted outside, is allowed to travel further away from the set of first folds along with the push rod. By being everted, the second fold elastically urges towards the push rod, helping the sealing boot on the whole keeping a small radial envelope outside of the brake actuator.

In a further preferred embodiment, the at least one second outer fold is arranged adjacent the first end portion of the push rod, and the at least one first outer fold is arranged between the at least one second outer fold and second end portion of the push rod.

In a further preferred embodiment, the at least one second outer fold is joined by second flanks, said second flanks being arranged completely inside the housing when the push rod is in the retracted position, and everted so as to extend at least partially outside the actuator housing when the push rod is in the extended position.

In a further preferred embodiment, the stop shoulder extends circumferentially on the inside of the boot at the second end portion and comprises a contact surface for a first one of the first flanks, said first contact surface being tapered towards the longitudinal axis. It has been found that by tapering the contact surface towards the longitudinal axis, the space requirement for the first flanks and thus for a majority of the sealing boot can be minimized even further. Also, it facilitates the eversion of the at least one second outer fold under continued push rod movement.

In a further preferred embodiment, the tapering angle of the contact surface is in a range of 15° to 75°, preferably in a range of 30° to 60°, relative to the longitudinal direction. The aforementioned ranges define the sweet spot which provides the best compromise between minimizing the space requirement of the sealing boot on the hand side at facilitating the movement of the at least one second outer fold when the push rod moves back and forth between the retracted position and the extended position.

In a further preferred embodiment, in the relaxed state of the boot, the boot has a length in the longitudinal direction, the at least one first outer fold has an outer diameter, the at least one second outer fold has an outer diameter, the at least one first outer fold comprises a first diameter-to-length-ratio, and the at least one second outer fold comprises a second diameter-to-length-ratio, wherein the first diameter-to-length-ratio is greater than the second diameter-to-length-ratio. Herein, the respective ratio is equal to the respective outer diameter divided by the length of the boot in the longitudinal direction.

Preferably, in embodiments where the sealing boot comprises a plurality of first outer folds, each first outer fold comprises a first diameter-to-length-ratio that is greater than the second diameter-to-length-ratio of the second outer folds.

In a further preferred embodiment, the first diameter-to-length-ratio is in a range of 0,60 or greater. Additionally or alternatively, the second diameter-to-length-ratio is in a range of 0,57 or less.

In a further preferred embodiment, when starting from the second end portion of the boot, the first diameter-to-length-ratio decreases from fold to fold by 2 % +/- 0,5 %. It has been found that by staggering the ratio from fold to fold as mentioned before, the space requirement of the sealing boot in the loaded state is minimized even further. When the second diameter-to-length-ratio is smaller than the first ratio as defined hereinabove, the version of the second fold or folds outwards is improved even further.

In a further preferred embodiment, the first diameter-to-length-ratio, i.e. the smallest one of the first diameter-to-length-ratios in embodiments having more than one first outer fold, and different outside diameters of the outer folds, is greater than the second diameter-to-length-ratio by 4 % or more, preferably by 6 % or more.

The invention has hereinabove been described with respect to the brake actuator itself in a first aspect.

In a second aspect, the invention also relates to a sealing boot for a brake actuator, in particular for a brake actuator of a commercial vehicle, preferably for a brake actuator according to any one of the preferred embodiments described hereinabove. The boot is configured to extend along a push rod of the brake actuator and is flexible in a longitudinal direction, and comprises a first end portion configured to sealingly engage a push rod of the brake actuator at an intermediate region of the push rod, and a second end portion configured to sealingly engage a push rod aperture of a housing of the brake actuator, the boot having a plurality of outer folds distributed along the longitudinal direction, wherein the boot is configured to resiliently deform between a relaxed state and a loaded state, the relaxed state corresponding to a retracted position of the push rod and the loaded state corresponded to an extended position of the push rod.

The invention attains the object mentioned initially in the second aspect by suggesting that the first end portion of the boot comprises a stop shoulder arranged inside the housing, and the plurality of outer folds comprises at least one first outer fold configured to abut against the stop shoulder on a first side of the second end portion when the boot is in the relaxed state, and at least one second outer fold configured to evert past the stop shoulder to a second side of the second end portion when the boot is in the loaded state.

Insofar, the second aspect makes uses of the same advantages and claims the same benefits as the brake actuator of the first aspect. Preferred embodiments of the brake actuator of the first aspect are at the same time also preferred embodiments of the sealing boot of the second aspect and vice versa. Therefore, reference is made to the description of the first aspect hereinabove to avoid unnecessary repetition.

Hereinafter, the invention will be described in more detail with reference to the accompanying drawings of a preferred embodiment. Herein:
- Fig. 1: shows a schematic cross-sectional view of a braking system according to a preferred embodiment,
- Fig. 2: shows the cross-sectional view of Fig. 1 in an alternate state of operation,
- Fig. 3: shows a close-up cross-sectional view of a sealing boot of the braking system of Figs. 1 and 2, and
- Fig. 4: shows the cross-sectional view of the sealing boot of Fig. 1 in an alternate state of operation.

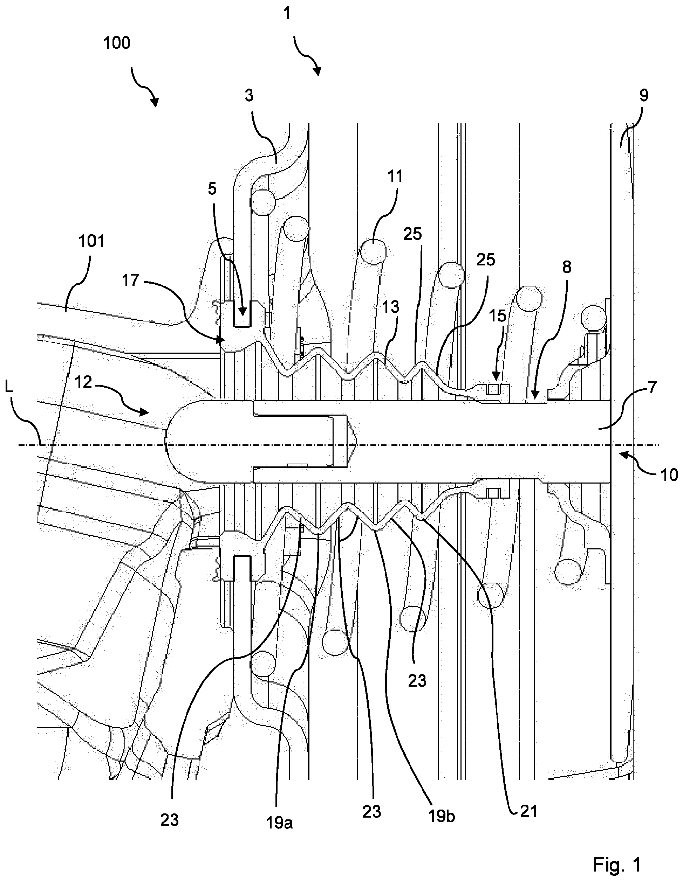

In Fig. 1, a braking system 100 is depicted comprising a brake actuator 1 for a vehicle such as a commercial vehicle. The brake actuator 1 is connected to a brake mechanism 101 such as a disc brake.

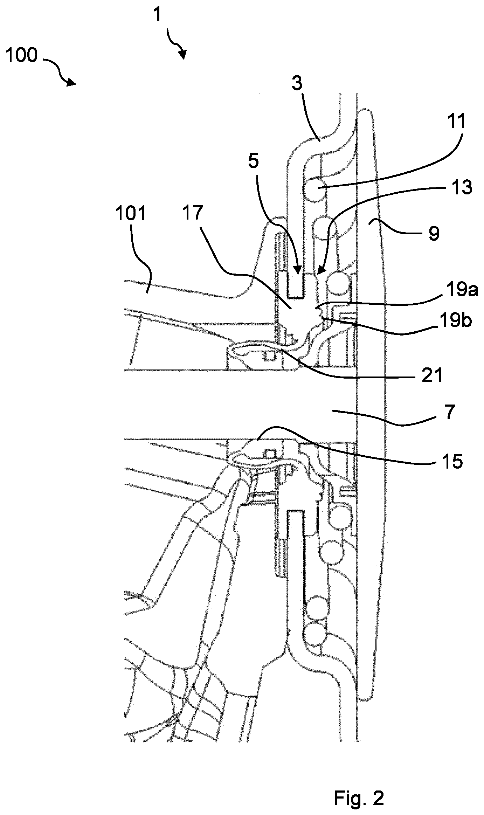

The brake actuator 1 comprises a housing 3 having a push rod aperture 5. The push rod aperture 5 preferably is a cylindrical cutout in the housing 3. The push rod aperture 5 is configured to accommodate a push rod 7 of the brake actuator 1. The push rod 7 comprises a proximal end 10 that is operatively coupled to a piston head 9 inside the housing 3. Opposite of the proximal end 10, the push rod 7 comprises a distal end 12 that is configured to connect to the brake mechanism 101. The push rod 7 is configured to move back and forth between a retracted position, shown in Fig. 1, and an extended position, shown in Fig. 2. In doing so, the push rod 7 moves back and forth through the push rod aperture 5 and into the housing of the brake mechanism 101. A return spring 11 is interposed between the housing 3 and the piston head 9 and effective to urge the push rod 7 towards the retracted position shown in Fig. 1.

During movement of the push rod 7, the air volume inside the housing 3 between the piston head 9 and the push rod aperture 5 varies depending on the stroke position of the push rod 7. During the return movement of the push rod towards the retracted position, the volume increases, while during the stroke operation of the push rod 7, the volume inside the housing between the push rod aperture 5 and the piston head 9 decreases. This change in volume may cause pressure variations inside the housing 3 which could drag air into the housing 3, in particular, during the retraction movement of the push rod 7. With the air, dirt and dust particles may be dragged into the housing 3 and deteriorate the operation of the brake actuator 1 over time, which is therefore undesired.

In order to prevent dust and dirt particles from entering into the housing 3, a sealing boot 13 is mounted to the push rod aperture 5 such that a first end portion 15 sealingly engages the push rod 7 at an intermediate region 8 of the push rod 7, in between the proximal end 10 and the distal end 12. A second end portion 17 of the sealing boot 13 engages the push rod aperture 5.

The sealing boot 13 is configured to resiliently deform when the push rod 7 moves between its retracted position towards its extended position and vice versa. In the state shown in Fig. 1, the sealing boot is in a relaxed state which corresponds to the retracted position of the push rod 7. In its relaxed state, the sealing boot 13 is either not subjected to any stress, or at least not subjected to such a level of stress that the sealing boot 13 would be stretched or compressed to its limit. It may be slightly stretched or slightly compressed while the push rod 7 is in its retracted position, and these states are still to be considered as the relaxed state within the terms of this invention.

The sealing boot comprises a plurality of outer folds, namely two first outer folds 19a, 19b, and a second outer fold 21. The first outer folds 19a, 19b are respectively joined by a set of first flanks 23 on each side of the fold, and the second outer fold 21 is joined by respective flanks 25 on each side thereof. In the relaxed state of the sealing boot, shown in Fig. 1, the first flanks 23 are spread apart from one another, and the second flanks 25 are also spread apart from one another.

In Fig. 2, the same brake actuator 1 of Fig. 1 is shown in a second state of operation. In this state of operation, the push rod 7 has been moved along its longitudinal direction L (cf. Fig. 1) into the extended position. The sealing boot 13 is now in a loaded state. In the loaded state, almost the entirety of the sealing boot 13 is located near the second end portion 17. The first folds 19a, 19b are compressed and abut against each other such that the respective first flanks 23 are directly adjacent to one another. However, the first folds 19a, 19b remain on a first side 4 of the second end portion 17, inside the housing 3.

The second fold, on the contrary, has been everted and the corresponding portion of the sealing boot 13 has been turned inside out such that the second outer fold 21 extends past the push rod aperture 5 to a second side 6 of the second end portion 17, outside of the housing 3 and towards the brake mechanism 101. The first end portion 15 of the sealing boot remains in sealing contact with the push rod 7 through this movement.

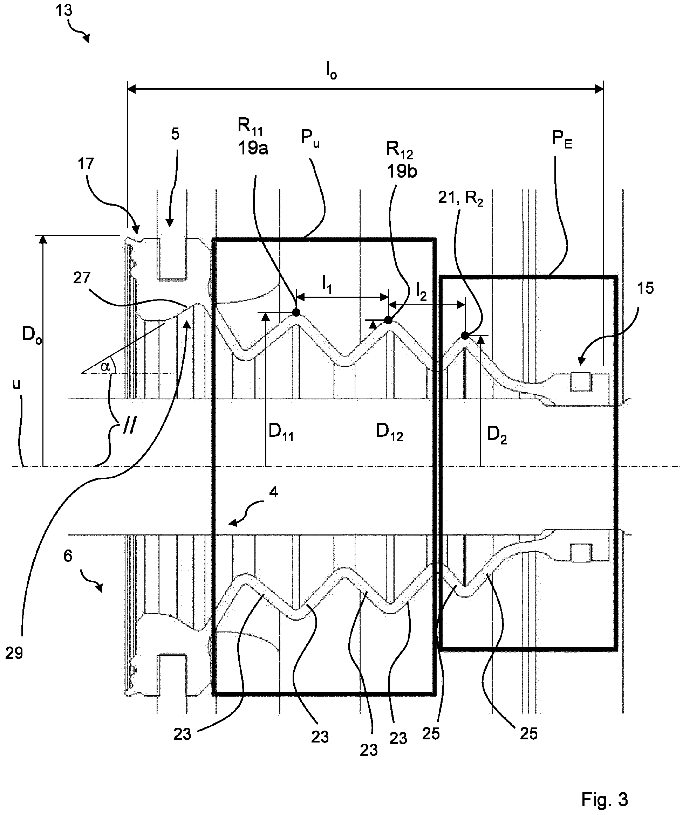

As can be seen from Fig. 2, in the loaded state, the novel sealing boot 13 requires minimal space inside the housing 3 of the brake actuator 1 such that the return spring 11 and the piston head 9 may be positioned very close to the push rod aperture 5. This means that an amount of dead volume inside the housing 3 in the extended position of the push rod 7 may be minimized by the specific configuration of the sealing boot 13, which will be shown in more detail in the following Figs. 3-4.

Fig. 3 shows the sealing boot 13 in more detail. From the first end portion 15 to the second end portion 17, the sealing boot has an overall length lₒ. The second end portion 17 which is effective to engage the housing aperture 5 has an outer diameter Dₒ. Adjacent to the second end portion 17, the sealing boot 13 may be considered as being subdivided in a first, uneversible portion Pu, and a second, eversible portion P_{E}. The plurality of first outer folds 19a, 19b are allocated in the uneversible portion Pu, while the at least one second outer fold 21 is allocated in the eversible portion P_{E}.

In the state shown in Fig. 3, the first outer folds 19a, 19b are spaced apart from one another at a distance l₁ and the second outer fold 21 is spaced apart from its nearest first outer fold 19b at a distance l₂.

The first outer fold 19a has an outer diameter D₁₁ which is smaller than the overall diameter Dₒ at the second end portion 17. Outer fold 19b has an outer diameter D₁₂ which is smaller than the outer diameter D₁₁ of outer fold 19a.

The second outer fold 21 has an outer diameter D₂ which is smaller than both outer diameters D₁₁, D₁₂ of the first outer folds 19a, 19b.

The first outer fold 19a has a diameter-to-length ratio R₁₁, wherein R₁₁=D₁₁/lₒ.

The second first outer fold 19b has a diameter-to-length ratio R₁₂, wherein R₁₂=D₁₂/lₒ. Both R₁₁ and R₁₂ are at 0.60 or greater, wherein preferably, R₁₁ is greater than R₁₂.

The second outer fold 21 has a second diameter-to-length ratio R₂, wherein R₂=D₂/lₒ. Preferably, R₂ is at 0.57 or less. In preferred embodiments, as described further herein above, the first diameter-to-length ratio R₁₁, R₁₂ decreases from fold 19a to fold 19b by 2% +/- 0.5%.

Further preferably, the first diameter-to-length ratios R₁₁, R₁₂ are greater than the second diameter-to-length ratio R₂ by 4% or more.

The sealing boot 13 further comprises, at the second end portion 17, an inner stop shoulder 27 which is tapered towards the push rod 7 at an angle α with respect to the longitudinal direction L. In preferred embodiments, α is in a range of 15° to 75°, preferably of 30° to 60° relative to the longitudinal direction L.

The stop shoulder 27 comprises a contact surface 29 for the first outer folds to abut against. By abutting against the contact surface 29 and then subsequently against each other, all first outer folds 19a, 19b shall be understood to abut against the stop shoulder 27. i.e. its contact surface 29, namely either directly or indirectly.

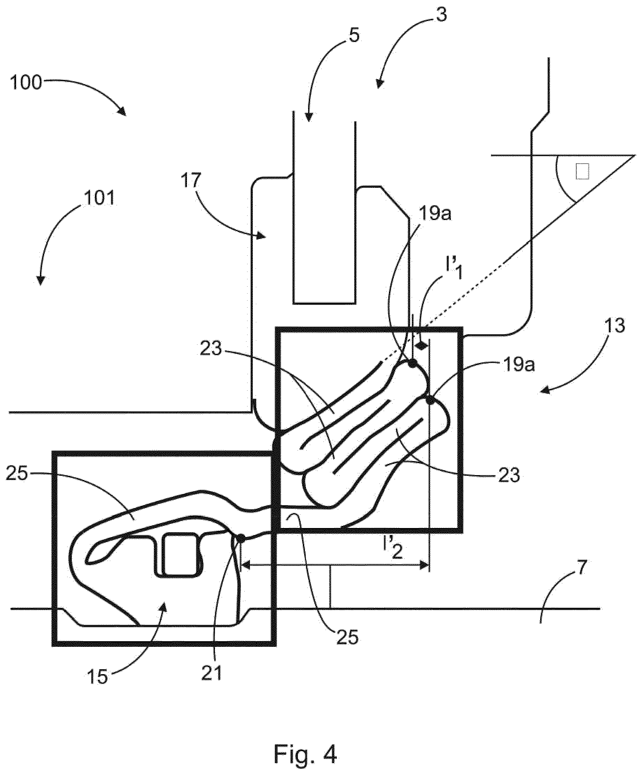

When the sealing boot 13 is transitioning from the relaxed state shown in Fig. 3 to its loaded state shown in Fig. 4, the following changes occur:
By moving the push rod 7 into the extended position, the first end portion 15 is forced past the push rod aperture 5, and also past the second end portion 17 of the sealing boot 13 from its first side 4 to its second side 6. The first outer folds 19a, 19b are compressed against each other such that the respective first flanks 23 contact each other.

As a consequence, in the loaded state shown in Fig. 4, the first outer folds 19a, 19b are at a second distance l'₁ which is significantly smaller than the first distance l₁ in the relaxed state shown in Fig. 3. Contrary thereto, the eversible portion Pₑ has been turned inside out (with exception to the first end portion 15 which sealingly engages the push rod 7) and most importantly the second fold 21 has been everted at least partially past the push rod aperture 5 towards the outside of the housing 3.

The second flanks 25 are spread apart further from one another than in the relaxed state shown in Fig. 3. The second fold 21 is, in its loaded state shown in Fig. 4, at a second distance l'₂ to the nearest first outer fold 19b that is greater than the first distance l₂ than in the relaxed state shown in Fig. 3.

As is clear from Fig. 4, the longitudinal space requirement of the uneversible portion P_{U} of the sealing boot 13 inside the housing 3 in its loaded state. Contributing factors for the minimal space requirement inside the housing 3 is the tapering angle α of the stop shoulder 27 and the staggering of the outer diameters D₁₁, D₁₂ of the first outer folds 19a, 19b.

At the same time, the eversion movement within the eversible portion P_{E} is facilitated by the dimensioning of the second outer fold 21 as mentioned herein above. The radial space requirement, i.e. perpendicular to the longitudinal direction, of the eversible portion P_{E} in the loaded state of the sealing boot 13 is also minimal as can be seen from Fig. 4. The second flanks 25 are almost straightened in the longitudinal direction L (cf. Fig. 3), thus urging towards - and staying close to - the push rod 7. The sealing boot 13 hardly consumes any radial space inside the brake mechanism 101.

### List of reference signs (Part of the description)

- 1: brake actuator
- 3: housing
- 4: first side of sealing boot end portion
- 5: push rod aperture
- 6: second side of sealing boot end portion
- 7: push rod
- 9: piston head
- 11: return spring
- 13: sealing boot
- 15: first end portion, sealing boot
- 17: second end portion, sealing boot
- 19a, 19b: first outer fold
- 21: second outer fold
- 23: first flank
- 25: second flank
- 27: stop shoulder
- 29: contact surface
- 100: braking system
- 101: brake mechanism
- Dₒ: outer diameter, 2^{nd} end portion
- D₁₁, D₁₂: outer diameter, first outer fold
- D₂: outer diameter, second outer fold

- L: longitudinal direction
- lₒ: overall length
- l₁: first distance between first outer folds
- l_{1'}: second distance between first outer folds
- l₂: first distance between 1^{st}, 2^{nd} outer folds
- l_{2'}: distance
- P_{U}: first, uneversible portion
- P_{E}: second, eversible portion
- R₁₁, R₁₂: diameter-to-length ratio, first outer folds
- R₂: diameter-to-length ratio, second outer fold
- α: angle

## Claims

1. A brake actuator (1) for a vehicle, in particular for a commercial vehicle, comprising
- a housing (3) having a push rod aperture (5),
- a push rod (7) configured to connect to a brake mechanism (101); wherein the push rod (7) is configured to move back and forth through the push rod aperture (5) between a retracted position and an extended position; and
- a sealing boot (13) extending along the push rod, being flexible in a longitudinal direction (L) and having a first end portion (15) sealingly engaging the push rod (7) at an intermediate region (8) of the push rod (7), and a second end portion (17) sealingly engaging the push-rod aperture (5); the boot (13) having a plurality of outer folds (19a, 19b, 21) distributed along the longitudinal direction (L); wherein the boot (13) is configured to resiliently deform between a relaxed state and a loaded state, the relaxed state corresponding to the retracted position of the push rod (7) and the loaded state corresponding to the extended position of the push rod (7);
**characterized in that**
the first end portion (15) of the boot (13) comprises a stop shoulder (27) arranged inside the housing (3), and the plurality of outer folds (19a, 19b, 21) comprises
- at least one first outer fold (19a, 19b) configured to abut against the stop shoulder (27) inside the housing (3) when the push rod (7) is in the extended position, and
- at least one second outer fold (21) configured to evert past the stop shoulder (27) to the outside of the housing (3) when the push rod (7) is in the extended position.

2. The brake actuator (1) of claim 1,
**characterized in that** the boot (13) comprises a plurality of first outer folds (19a, 19b), wherein the first outer folds (19a, 19b) are spaced apart from each other at a first distance (l₁) when the boot (13) is in the relaxed state; and at a second distance (l'₁) smaller than the first distance (l₁) when the boot (13) is in the loaded state, wherein preferably, the first outer folds (19a, 19b) adjoin when the boot (13) is in the loaded state.

3. The brake actuator (1) of claim 1 or 2,
wherein the first outer folds (19a, 19b) are joined by first flanks (23), said first flanks (23) being configured to spread apart when the boot (13) is in the relaxed state and to abut against one another when the boot (13) is in the loaded state.

4. The brake actuator (1) of any one of the preceding claims,
wherein the number of second outer folds (21) is smaller than the number of first outer folds (19a, 19b).

5. The brake actuator (1) of any one of the preceding claims,
having one second outer fold (21), wherein the second outer fold (21) is axially spaced apart from the nearest first outer fold (19b) at a first distance (l₂) when the boot (13) is in the relaxed state; and at a second distance (l'₂) larger than the first distance (l₂) when the boot (13) is in the loaded state.

6. The brake actuator (1) of any one of the preceding claims,
**characterized in that** the at least one second outer fold (21) is arranged adjacent the first end portion (15) of the push rod (7); and the at least one first outer fold (19a, 19b) is arranged between the at least one second outer fold (21) and the second end portion (17) of the push rod (7).

7. The brake actuator (1) of any one of the preceding claims,
**characterized in that** the at least one second outer fold (21) is joined by second flanks (25), said second flanks (25) being arranged completely inside the housing (3) when the push rod (7) is in the retracted position, and everted so as to extend at least partially outside the actuator housing (3) when the push rod (7) is in the extended position.

8. The brake actuator (1) of any one of the preceding claims,
**characterized in that** the stop shoulder (27) extends circumferentially on the inside of the boot (13) at the second end portion (17) and comprises a contact surface (29) for a first one (19a) of the first flanks (19a, 19b), said contact surface (29) being tapered towards the push rod (7).

9. The brake actuator (1) of claim 8,
**characterized in that** the tapering angle (α) is in a range of 15° to 75°, preferably in a range of 30° to 60°, relative to the longitudinal direction (L).

10. The brake actuator (1) of any one of the preceding claims,
wherein in the relaxed state of the boot (13),
- the boot (13) has a length (lₒ) in the longitidunal direction (L),
- the at least one first outer fold has an outer diameter (D₁₁, D₁₂),
- the at least one second outer fold has an outer diameter (D₂),
- the at least one first outer fold comprises a first diameter-to-length-ratio (R₁₁, R₁₂), and
- the at least one second outer fold comprises a second diameter-to-length-ratio (R₂), wherein the first diameter-to-length-ratio (R₁₁, R₁₂) is greater than the second diameter-to-length-ratio (R₂), wherein the respective ratio (R₁₁, R₁₂, R₂) is equal to the respective outer diameter (D₁₁, D₁₂, D₂) divided by the length of the boot (13).

11. The brake actuator (1) of claim 10, wherein
- the first diameter-to-length-ratio (R₁₁, R₁₂) is in a range of 0,60 or greater, and/or
- the second diameter-to-length-ratio (R₂) is in a range of 0,57 or less.

12. The brake actuator (1) of claim 10 or 11,
wherein when starting from the second end portion (17) of the boot (13), the first diameter-to-length-ratio (R₁₁, R₁₂) decreases from fold to fold by 2% +/- 0,5%.

13. The brake actuator (1) of claim 12,
**characterized in that** the first diameter-to-length-ratio (R₁₁, R₁₂), i.e. the smallest one of the first diameter-to-length-ratios (R₁₁, R₁₂) is greater than the second diameter-to-length-ratio (R₂) by 4% or more, preferably by 6% or more.

14. A sealing boot (13) for a brake actuator (1), in particular for a brake actuator (1) of a commercial vehicle, preferably for a brake actuator (1) of any one of the preceding claims,
the boot (13) being configured to extend along a push rod (7) of the brake actuator (1) and being flexible in a longitudinal direction (L), and comprising
a first end portion (15) configured to sealingly engage the push rod (7) of the brake actuator (1) at an intermediate region (8) of the push rod (7), and
a second end portion (17) configured to sealingly engage a push rod aperture (5) of a housing (3) of the brake actuator (1);
the boot (13) having a plurality of outer folds (19a,19b,21) distributed along the longitudinal direction (L); wherein the boot (13) is configured to resiliently deform between a relaxed state and a loaded state, the relaxed state corresponding to a retracted position of the push rod (7) and the loaded state corresponding to an extended position of the push rod (7);
**characterized in that**
the first end portion (15) of the boot (13) comprises a stop shoulder (27) configured to be arranged inside
the housing (3), and the plurality of outer folds (19a, 19b, 21) comprises
- at least one first outer fold (19a, 19b) configured to abut against the stop shoulder (27) on a first side (4) of the second end portion (17) when the boot (13) is in the relaxed state, and
- at least one second outer fold (21) configured to evert past the stop shoulder (27) to a second side of (6) the second end portion (17) when the boot (13) is in the loaded state.

## Patentansprüche

1. Bremszylinder (1) für ein Fahrzeug, insbesondere für ein Nutzfahrzeug, umfassend
- ein Gehäuse (3), das eine erste Schubstangenöffnung (5) aufweist,
- eine Schubstange (7), die konfiguriert ist, um mit einem Bremsmechanismus (101) verbunden zu werden; wobei die Schubstange (7) konfiguriert ist, um sich durch die Schubstangenöffnung (5) hindurch zwischen einer eingefahrenen Position und einer ausgefahrenen Position hin und her zu bewegen; und
- einen Dichtungsbalg (13), der sich entlang der Schubstange erstreckt, der in einer Längsrichtung (L) flexibel ist und einen ersten Endabschnitt (15), der die Schubstange (7) an einer Zwischenzone (8) der Schubstange (7) dichtend in Eingriff nimmt, und einen zweiten Endabschnitt (17) aufweist, der die Schubstangenöffnung (5) dichtend in Eingriff nimmt; wobei der Balg (13) eine Vielzahl von Außenfalten (19a, 19b, 21) aufweist, die entlang der Längsrichtung (L) verteilt sind; wobei der Balg (13) konfiguriert ist, um sich zwischen einem entspannten Zustand und einem belasteten Zustand elastisch zu verformen, wobei der entspannte Zustand der eingefahrenen Position der Schubstange (7) entspricht und der belastete Zustand der ausgefahrenen Position der Schubstange (7) entspricht;
**dadurch gekennzeichnet, dass**
der erste Endabschnitt (15) des Balgs (13) eine Anschlagschulter (27) aufweist, die innerhalb des Gehäuses (3) angeordnet ist, und die Vielzahl von Außenfalten (19a, 19b, 21) umfasst
- mindestens eine erste Außenfalte (19a, 19b), die konfiguriert ist, um an der Anschlagschulter (27) innerhalb des Gehäuses (3) anzuliegen, wenn sich die Schubstange (7) in der ausgefahrenen Position befindet, und
- mindestens eine zweite Außenfalte (21), die konfiguriert ist, um sich über die Anschlagschulter (27) hinaus zu der Außenseite des Gehäuses (3) umzustülpen, wenn sich die Schubstange (7) in der ausgefahrenen Position befindet.

2. Bremszylinder (1) nach Anspruch 1,
**dadurch gekennzeichnet, dass** der Balg (13) eine Vielzahl von ersten Außenfalten (19a, 19b) umfasst, wobei die ersten Außenfalten (19a, 19b) in einer ersten Entfernung (l₁), wenn sich der Balg (13) in dem entspannten Zustand befindet; und in einer zweiten Entfernung(l'₁) voneinander beabstandet sind, die kleiner als die erste Entfernung (l₁) ist, wenn sich der Balg (13) in dem belasteten Zustand befindet, wobei vorzugsweise die ersten Außenfalten (19a, 19b) aneinandergrenzen, wenn sich der Balg (13) in dem belasteten Zustand befindet.

3. Bremszylinder (1) nach Anspruch 1 oder 2,
wobei die ersten Außenfalten (19a, 19b) durch erste Flanken (23) zusammengefügt sind, wobei die ersten Flanken (23) konfiguriert sind, um sich auseinander zu spreizen, wenn sich der Balg (13) in dem entspannten Zustand befindet, und aneinander anzuliegen, wenn sich der Balg (13) in dem belasteten Zustand befindet.

4. Bremszylinder (1) nach einem der vorstehenden Ansprüche,
wobei die Anzahl von zweiten Außenfalten (21) kleiner als die Anzahl von ersten Außenfalten (19a, 19b) ist.

5. Bremszylinder (1) nach einem der vorstehenden Ansprüche,
der eine zweite Außenfalte (21) aufweist, wobei die zweite Außenfalte (21) von der nächstgelegenen ersten Außenfalte (19b) in einer ersten Entfernung (l₂), wenn sich der Balg (13) in dem entspannten Zustand befindet; und in einer zweiten Entfernung (l'₂) axial beabstandet ist, die größer als die erste Entfernung (l₂) ist, wenn sich der Balg (13) in dem belasteten Zustand befindet.

6. Bremszylinder (1) nach einem der vorstehenden Ansprüche,
**dadurch gekennzeichnet, dass** die mindestens eine zweite Außenfalte (21) benachbart zu dem ersten Endabschnitt (15) der Schubstange (7) angeordnet ist; und die mindestens eine erste Außenfalte (19a, 19b) zwischen der mindestens einen zweiten Außenfalte (21) und dem zweiten Endabschnitt (17) der Schubstange (7) angeordnet ist.

7. Bremszylinder (1) nach einem der vorstehenden Ansprüche,
**dadurch gekennzeichnet, dass** die mindestens eine zweite Außenfalte (21) durch zweite Flanken (25) zusammengefügt ist, wobei die zweiten Flanken (25) vollständig innerhalb des Gehäuses (3) angeordnet sind, wenn sich die Schubstange (7) in der eingefahrenen Position befindet, und umgestülpt ist, um sich mindestens teilweise außerhalb des Zylindergehäuses (3) zu erstrecken, wenn sich die Schubstange (7) in der ausgefahrenen Position befindet.

8. Bremszylinder (1) nach einem der vorstehenden Ansprüche,
**dadurch gekennzeichnet, dass** sich die Anschlagschulter (27) umlaufend auf der Innenseite des Balgs (13) an dem zweiten Endabschnitt (17) erstreckt und eine Auflageoberfläche (29) für eine erste (19a) der ersten Flanken (19a, 19b) umfasst, wobei die Auflageoberfläche (29) zu der Schubstange (7) hin konisch zugespitzt ist.

9. Bremszylinder (1) nach Anspruch 8,
**dadurch gekennzeichnet, dass** der Zuspitzungswinkel (α) in einem Bereich von 15° bis 75°, vorzugsweise in einem Bereich von 30° bis 60°, bezüglich der Längsrichtung (L), liegt.

10. Bremszylinder (1) nach einem der vorstehenden Ansprüche,
wobei, in dem entspannten Zustand des Balgs (13),
- der Balg (13) eine Länge (lₒ) in der Längsrichtung (L) aufweist,
- die mindestens eine erste Außenfalte einen Außendurchmesser (D₁₁, D₁₂) aufweist,
- die mindestens eine zweite Außenfalte einen Außendurchmesser (D₂) aufweist,
- die mindestens eine erste Außenfalte ein erstes Durchmesser-Längen-Verhältnis (R₁₁, R₁₂) aufweist und
- die mindestens eine zweite Außenfalte ein zweites Durchmesser-Längen-Verhältnis (R₂) aufweist,
wobei das erste Durchmesser-Längen-Verhältnis (R₁₁, R₁₂) größer als das zweite Durchmesser-Längen-Verhältnis (R₂) ist, wobei das jeweilige Verhältnis (R₁₁, R₁₂, R₂) gleich dem jeweiligen Außendurchmesser (D₁₁, D₁₂, D₂), geteilt durch die Länge des Balgs (13), ist.

11. Bremszylinder (1) nach Anspruch 10, wobei
- das erste Durchmesser-Längen-Verhältnis (R₁₁, R₁₂) in einem Bereich von 0,60 oder größer liegt und/oder
- das zweite Durchmesser-Längen-Verhältnis (R₂) in einem Bereich von 0,57 oder kleiner liegt.

12. Bremszylinder (1) nach Anspruch 10 oder 11,
wobei sich, ausgehend von dem zweiten Endabschnitt (17) des Balgs (13), das erste Durchmesser-Längen-Verhältnis (R₁₁, R₁₂) von Falte zu Falte um 2 % +/- 0,5 % verringert.

13. Bremszylinder (1) nach Anspruch 12,
**dadurch gekennzeichnet, dass** das erste Durchmesser-Längen-Verhältnis (R₁₁, R₁₂), d. h. das kleinste der ersten Durchmesser-LängenVerhältnisse (R₁₁, R₁₂) um 4 % oder mehr, vorzugsweise um 6 % oder mehr, größer als das zweite Durchmesser-Längen-Verhältnis (R₂) ist.

14. Dichtungsbalg (13) für einen Bremszylinder (1), insbesondere für einen Bremszylinder (1) eines Nutzfahrzeugs, vorzugsweise für einen Bremszylinder (1) nach einem der vorstehenden Ansprüche,
wobei der Balg (13) konfiguriert ist, um sich entlang einer Schubstange (7) des Bremszylinders (1) zu erstrecken, und in einer Längsrichtung (L) flexibel ist und umfasst
einen ersten Endabschnitt (15), der konfiguriert ist, um die Schubstange (7) des Bremszylinders (1) an einer Zwischenzone (8) der Schubstange (7) dichtend in Eingriff zu nehmen, und
einen zweiten Endabschnitt (17), der konfiguriert ist, um eine Schubstangenöffnung (5) eines Gehäuses (3) des Bremszylinders (1) dichtend in Eingriff zu nehmen;
wobei der Balg (13) eine Vielzahl von Außenfalten (19a,19b,21) aufweist, die entlang der Längsrichtung (L) verteilt sind; wobei der Balg (13) konfiguriert ist, um sich zwischen einem entspannten Zustand und einem belasteten Zustand elastisch zu verformen, wobei der entspannte Zustand einer eingefahrenen Position der Schubstange (7) entspricht und der belastete Zustand einer ausgefahrenen Position der Schubstange (7) entspricht;
**dadurch gekennzeichnet, dass**
der erste Endabschnitt (15) des Balgs (13) eine Anschlagschulter (27) umfasst, die konfiguriert ist, um innerhalb des Gehäuses (3) angeordnet zu sein, und die Vielzahl von Außenfalten (19a, 19b, 21) umfasst
- mindestens eine erste Außenfalte (19a, 19b), die konfiguriert ist, um an der Anschlagschulter (27) auf einer ersten Seite (4) des zweiten Endabschnitts (17) anzuliegen, wenn sich der Balg (13) in dem entspannten Zustand befindet, und
- mindestens eine zweite Außenfalte (21), die konfiguriert ist, um sich über die Anschlagschulter (27) hinaus zu einer zweiten Seite (6) des zweiten Endabschnitts (17) umzustülpen, wenn sich der Balg (13) in dem belasteten Zustand befindet.

## Revendications

1. Actionneur de frein (1) pour un véhicule, en particulier un véhicule utilitaire, comprenant
un boîtier (3) présentant une ouverture de tige de poussée (5),
- une tige de poussée (7) conçue pour se relier à un mécanisme de freinage (101) ; dans lequel la tige de poussée (7) est conçue pour se déplacer d'avant en arrière à travers l'ouverture de tige de poussée (5) entre une position rétractée et une position étendue ; et
- un soufflet d'étanchéité (13) s'étendant le long de la tige de poussée, en étant flexible dans une direction longitudinale (L) et présentant une première partie d'extrémité (15) mettant en prise de manière étanche la tige de poussée (7) au niveau d'une région intermédiaire (8) de la tige de poussée (7), et une seconde partie d'extrémité (17) mettant en prise de manière étanche l'ouverture de la tige de poussée (5) ; le soufflet (13) présentant plusieurs plis externes (19a, 19b, 21) répartis le long de la direction longitudinale (L) ; dans lequel le soufflet (13) est conçu pour se déformer de manière élastique entre un état relâché et un état chargé, l'état relâché correspondant à la position rétractée de la tige de poussée (7) et l'état chargé correspondant à la position étendue de la tige de poussée (7) ;
**caractérisé en ce que**
la première partie d'extrémité (15) du soufflet (13) comprend un épaulement d'arrêt (27) disposé à l'intérieur du boîtier (3), et la pluralité de plis externes (19a, 19b, 21) comprend
- au moins un premier pli externe (19a, 19b) conçu pour venir en butée contre l'épaulement d'arrêt (27) à l'intérieur du boîtier (3) lorsque la tige de poussée (7) est en position étendue, et
- au moins un second pli externe (21) conçu pour dépasser de l'épaulement d'arrêt (27) vers l'extérieur du boîtier (3) lorsque la tige de poussée (7) est en position étendue.

2. Actionneur de frein (1) selon la revendication 1,
**caractérisé en ce que** le soufflet (13) comprend une pluralité de premiers plis externes (19a, 19b), dans lequel les premiers plis externes (19a, 19b) sont espacés les uns des autres d'une première distance (l₁) lorsque le soufflet (13) est à l'état relâché ; et d'une seconde distance (l'₁) inférieure à la première distance (l₁) lorsque le soufflet (13) est à l'état chargé, dans lequel les premiers plis externes (19a, 19b) sont adjacents lorsque le soufflet (13) est à l'état chargé.

3. Actionneur de frein (1) selon la revendication 1 ou 2,
dans lequel les premiers plis externes (19a, 19b) sont reliés par des premiers flancs (23), lesdits premiers flancs (23) étant conçus pour s'écarter lorsque le soufflet (13) est à l'état relâché et pour s'appuyer l'un contre l'autre lorsque le soufflet (13) est à l'état chargé.

4. Actionneur de frein (1) selon l'une quelconque des revendications précédentes,
dans lequel le nombre de seconds plis externes (21) est inférieur au nombre de premiers plis externes (19a, 19b).

5. Actionneur de frein (1) selon l'une quelconque des revendications précédentes,
présentant un second pli externe (21), dans lequel le second pli externe (21) est espacé axialement du premier pli externe le plus proche (19b) d'une première distance (l₂) lorsque le soufflet (13) est à l'état relâché ; et d'une seconde distance (l'₂) supérieure à la première distance (l₂) lorsque le soufflet (13) est à l'état chargé.

6. Actionneur de frein (1) selon l'une quelconque des revendications précédentes,
**caractérisé en ce que** l'au moins un second pli externe (21) est disposé adjacent à la première partie d'extrémité (15) de la tige de poussée (7) ; et l'au moins un premier pli externe (19a, 19b) est disposé entre l'au moins un second pli externe (21) et la seconde partie d'extrémité (17) de la tige de poussée (7).

7. Actionneur de frein (1) selon l'une quelconque des revendications précédentes,
**caractérisé en ce que** l'au moins un second pli externe (21) est relié par des seconds flancs (25), lesdits seconds flancs (25) étant disposés complètement à l'intérieur du boîtier (3) lorsque la tige de poussée (7) est en position rétractée, et évasés de manière à s'étendre au moins partiellement à l'extérieur du boîtier de l'actionneur (3) lorsque la tige de poussée (7) est en position étendue.

8. Actionneur de frein (1) selon l'une quelconque des revendications précédentes,
**caractérisé en ce que** l'épaulement d'arrêt (27) s'étend circonférentiellement à l'intérieur du soufflet (13) au niveau de la seconde partie d'extrémité (17) et comprend une surface de contact (29) pour un premier (19a) des premiers flancs (19a, 19b), ladite surface de contact (29) étant effilée vers la tige de poussée (7).

9. Actionneur de frein (1) selon la revendication 8,
**caractérisé en ce que** l'angle d'inclinaison (α) est compris entre 15° et 75°, de préférence entre 30° et 60°, par rapport à la direction longitudinale (L).

10. Actionneur de frein (1) selon l'une quelconque des revendications précédentes,
dans lequel, à l'état relâché du soufflet (13),
- le soufflet (13) présente une longueur (lₒ) dans la direction longitudinale (L),
- l'au moins un premier pli externe présente un diamètre externe (D₁₁, D₁₂),
- l'au moins un second pli externe présente un diamètre externe (D₂),
- l'au moins un premier pli externe comprend un premier rapport diamètre/longueur (R₁₁, R₁₂), et
- l'au moins un second pli externe comprend un second rapport diamètre/longueur (R₂),
dans lequel le premier rapport diamètre/longueur (R₁₁, R₁₂) est supérieur au second rapport diamètre/longueur (R₂), dans lequel le rapport respectif (R₁₁, R₁₂, R₂) est égal au diamètre externe respectif (D₁₁, D₁₂, D₂) divisé par la longueur du soufflet (13).

11. Actionneur de frein (1) selon la revendication 10, dans lequel
- le premier rapport diamètre/longueur (R₁₁, R₁₂) est supérieur ou égal à 0,60, et/ou
- le secondrapport diamètre/longueur (R₂) est autour de 0,57 ou moins.

12. Actionneur de frein (1) selon la revendication 10 ou 11,
dans lequel, en partant de la seconde extrémité (17) du soufflet (13), le premier rapport diamètre/longueur (R₁₁, R₁₂) diminue d'un pli à l'autre de 2 % +/-0,5 %.

13. Actionneur de frein (1) selon la revendication 12,
**caractérisé en ce que** le premier rapport diamètre/longueur (R₁₁, R₁₂), c'est-à-dire le plus petit des premiers rapports diamètre/longueur (R₁₁, R₁₂) est supérieur au second rapport diamètre/longueur (R₂) de 4 % ou plus, de préférence de 6 % ou plus.

14. Soufflet d'étanchéité (13) pour un actionneur de frein (1), en particulier pour un actionneur de frein (1) d'un véhicule utilitaire, de préférence pour un actionneur de frein (1) selon l'une quelconque des revendications précédentes,
le soufflet (13) est conçu pour s'étendre le long d'une tige de poussée (7) de l'actionneur de frein (1) et est flexible dans une direction longitudinale (L), et comprend
une première partie d'extrémité (15) conçue pour engager de manière étanche la tige de poussée (7) de l'actionneur de frein (1) au niveau d'une région intermédiaire (8) de la tige de poussée (7), et
une seconde partie d'extrémité (17) conçue pour engager de manière étanche une ouverture de tige de poussée (5) d'un boîtier (3) de l'actionneur de frein (1) ;
le soufflet (13) présentant une pluralité de plis externes (19a, 19b, 21) répartis le long de la direction longitudinale (L) ; dans lequel le soufflet (13) est conçu pour se déformer de manière élastique entre un état relâché et un état chargé, l'état relâché correspondant à une position rétractée de la tige de poussée (7) et l'état chargé correspondant à une position étendue de la tige de poussée (7) ;
**caractérisé en ce que**
la première partie d'extrémité (15) du soufflet (13) comprend un épaulement d'arrêt (27) conçu pour être disposé à l'intérieur du boîtier (3), et la pluralité de plis externes (19a, 19b, 21) comprend
- au moins un premier pli externe (19a, 19b) conçu pour s'appuyer contre l'épaulement d'arrêt (27) sur un premier côté (4) de la seconde partie d'extrémité (17) lorsque le soufflet (13) est à l'état relâché, et
- au moins un second pli externe (21) conçu pour dépasser de l'épaulement d'arrêt (27) vers un second côté (6) de la seconde partie d'extrémité (17) lorsque le soufflet (13) est à l'état chargé.
